# EUROPÄISCHE PATENTSCHRIFT

(11) **EP 0 903 504 B1**
(45) Veröffentlichungstag und Bekanntmachung des Hinweises auf die Patenterteilung: **16.01.2002**
(21) Anmeldenummer: 98118116.7
(22) Anmeldetag: 24.09.1998
(51) Int. Cl.: F16B 7/04

(54) **Profilverbinder**
Channel connector
Raccord de profilés

(30) Priorität: 31.10.1997 DE 19748237
(43) Veröffentlichungstag der Anmeldung: 24.03.1999
(73) Patentinhaber: Friatec Aktiengesellschaft, 68229 Mannheim (DE)
(72) Erfinder: Schweigert, Adolf, 88682 Salem (DE); Krzempek, Gregor, 68723 Oftersheim (DE); Warkus, Clemens, 68723 Oftersheim (DE)
(74) Vertreter: Schmitt, Meinrad, Dipl.-Ing.

(56) Entgegenhaltungen:
- DE-A- 4 406 208
- DE-U- 29 511 885
- FR-A- 1 394 313

## Beschreibung

Die Erfindung bezieht sich auf einen Profilverbinder gemäß den im Oberbegriff des Patentanspruchs 1 gegebenen Merkmalen.

Aus der DE 44 06 208 A 1 ist ein derartiger Profilverbinder mit Haltekrallen bekannt, welche mit Längsnuten eines ersten Profils zur Herstellung einer kraft- und formschlüssigen Verbindung in Eingriff bringbar sind. Die Haltekrallen sind jeweils am Ende von Halteklammern angeordnet, welche innerhalb eines Gehäuses angeordnet sind, welches von der Stirnseite her in eine Hohlkammer eines zweiten Profils einsetzbar ist. Die Halteklammern sind abgewinkelt ausgebildet und weisen aneinanderliegende, gekrümmte Außenflächen auf, über welche die beiden Halteklammern sich gegenseitig abstützen. Die Halteklammern werden mittels einer Schraube derart gegeneinander verspannt, daß einerseits die genannten Haltekrallen in die Nuten eingreifen und so das erste Profil halten, während am anderen Ende der jeweiligen Halteklammer angeordnete Verzahnungen oder Krallen gegen die Innenfläche des zweiten Profils verspannt werden. Die Spann- bzw. Haltekräfte für die beiden Profile hängen unmittelbar voneinander ab, und eine voneinander unabhängige Dimensionierung der Spannkräfte ist praktisch nicht möglich. Es müssen daher recht enge Fertigungstoleranzen eingehalten werden, welche einen hohen Fertigungsaufwand erforderlich machen. Hierbei kann auch nicht außer acht gelassen werden, daß die beiden miteinander zu verbindenden Profile, welche als Hohlprofile ausgebildet sind, gleichfalls mit hoher Präzision gefertigt werden müssen, um auch im ungünstigsten Falle bei Addition sämtlicher Toleranzen sowohl der Profilschienen als auch des Profilverbinders eine Verbindung ermöglichen zu können.

Hiervon ausgehend liegt der Erfindung die Aufgabe zugrunde, den Profilverbinder dahingehend weiterzubilden, daß mit geringem Fertigungsaufwand eine funktionsgerechte Verbindung der Profilschienen sichergestellt wird. Der Profilverbinder soll eine stabile und dauerhafte Verbindung der beiden Profilschienen mit geringem Fertigungs- und Montageaufwand ermöglichen.

Die Lösung dieser Aufgabe erfolgt gemäß den im Patentanspruch 1 angegebenen Merkmalen.

Der vorgeschlagene Profilverbinder zeichnet sich durch eine funktionsgerechte Konstruktion aus und gewährleistet mit einfachen Mitteln eine stabile und dauerhafte Verbindung der Profilschienen. Die Verspannung der Halteklammer mit den beiden Haltekrallen bezüglich der ersten Profilschiene erfolgt unabhängig von dem Verspannen des Profilverbinders mit der zweiten Profilschiene. Es wird in besonders zweckmäßiger Weise eine Funktionstrennung derart vorgenommen, daß die Haltekräfte des Spannelements für die beiden Profilschienen unabhängig voneinander den Erfordernissen entsprechend vorgebbar sind. Das Spannelement enthält zur Verbindung der zweiten Profilschiene wenigstens einen, zweckmäßig zwei Spannkörper zur Erzeugung einer zumindest teilweise radial auf die Innenseite der zweiten Profilschiene wirkende Vorspannung. Es ist eine Spindel vorgesehen, welche zur Herstellung der Verbindung drehbar ist, wobei einerseits auf die Halteklammer eine im wesentlichen axiale Spannkraft vorgegeben wird, während der oder die Spannkörper mittels der Spindel radial nach außen zwecks Verspannung des Profilverbinders mit der Innenfläche der zweiten Profilschiene bewegbar sind. Das Spannelement ist zweckmäßig einteilig, bevorzugt aus Stahlblech, insbesondere aus Federstahl, gefertigt und enthält zum einen die Halteklammer mit den beiden Haltekrallen und zum anderen den oder die beiden Spannkörper. Die Spindel enthält Nocken, Schrägflächen, Schraubflächen oder dergleichen, um einerseits die axiale Spannung der Halteklammer vorzugeben und um andererseits die radiale Aufweitung der Spannkörper beim Herstellen der Verbindung zu ermöglichen. In einer besonderen Ausgestaltung wird die axiale Spannung nicht mittels der Spindel, sondern über ein Betätigungselement vorgegeben, welches ferner zur Drehung der Spindel vorgesehen ist. Das Betätigungselement weist wenigstens eine Schrägfläche zur Erzeugung der axialen Spannung der Halteklammer auf. Das Spannelement ist zusammen mit der Spindel in zweckmäßiger Weise größtenteils in dem Gehäuse angeordnet, dessen Außenkontur zumindest teilweise der Innenkontur des zweiten Profils angepaßt ist, welches als Hohlkammerprofil ausgebildet ist. Das Betätigungselement ist bevorzugt als ein Schieber ausgebildet, welcher zum Drehen der genannten Spindel beim Herstellen der Verbindung in zweckmäßiger Weise radial bezüglich der Spindelachse bewegbar angeordnet ist. Das Betätigungselement ist insbesondere derart ausgebildet und angeordnet, daß es nach Herstellung der Verbindung der beiden Profilschienen eine definierte Position, zweckmäßig im wesentlichen innerhalb des Gehäuses einnimmt.

Weiterbildungen und besondere Ausgestaltungen der Erfindung sind in den Unteransprüchen sowie der weiteren Beschreibung angegeben.

Die Erfindung wird nachfolgend anhand besonderer Ausführungsbeispiele näher erläutert, ohne daß hierbei eine Einschränkung der Erfindung erfolgt. Es zeigen:
- Fig. 1: eine perspektivische Darstellung des Profilverbinders,
- Fig. 2: eine seitliche Ansicht des Spannelements,
- Fig. 3: eine Ansicht des Spannelements in Blickrichtung III gemäß Fig. 2,
- Fig. 4: eine Ansicht in Blickrichtung IV gemäß Fig. 3,
- Fig. 5: eine seitliche Ansicht der Spindel,
- Fig. 6: eine Ansicht der Spindel in Blickrichtung VI gemäß Fig. 5,
- Fig. 7: eine perspektivische Darstellung einer besonderen Ausgestaltung des Profilverbinders,
- Fig. 8: den Profilverbinder gemäß Fig. 7, jedoch ohne Gehäuse.

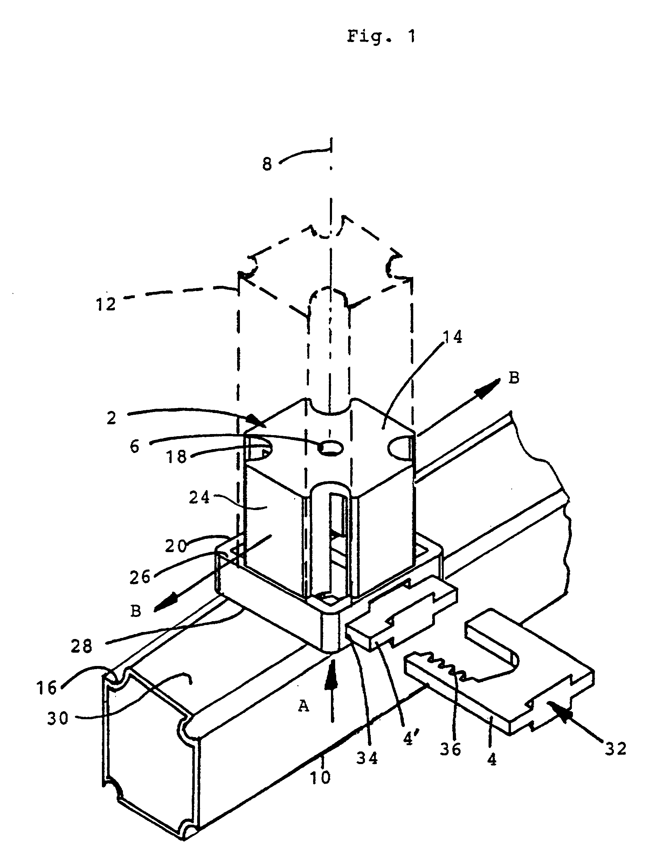

Fig. 1 zeigt perspektivisch den Profilverbinder mit einem Gehäuse 2 und einem Betätigungselement 4, zum Betätigen einer im Inneren des Gehäuses 2 angeordneten, hier nicht weiter dargestellten Spindel, die mit ihrem einen Ende in einer Bohrung 6 im Boden des Gehäuses 2 um eine Längsachse 8 drehbar gelagert ist. Das Gehäuse 2 ist topfartig und im Inneren hohl zur Aufnahme der genannten Spindel und eines Spannelements ausgebildet. Das Spannelement besitzt nachfolgend noch zu erläuternde Haltekrallen zur kraft- und / oder formschlüssigen Verbindung mit einem ersten Profil 10. Das erste Profil 10 sowie ein zweites Profil 12 sind übereinstimmend als Hohlkammerprofile ausgebildet, wobei das Gehäuse 2 mit einem Einsatzteil 14 stirnseitig in den Hohlraum des zweiten Profils 12 eingesetzt ist. Die Außenkontur des Einsatzteils 14 ist zumindest teilweise an die Innenkontur der beiden Profile 10, 12 angepaßt. Die Profile 10, 12 besitzen einen im Prinzip quadratischen Querschnitt und enthalten in ihren Eckbereichen über die gesamte Länge verlaufende Längsnuten 16. Entsprechend den Längsnuten 16 weist das Einsatzteil 14 in seinen vier Ecken zur Längsachse 8 nach innen weisende Ausnehmungen 18 auf. Anschließend an das Einsatzteil 14 besitzt das Gehäuse 2 einen im wesentlichen rechteckförmigen Rahmen 20 mit abgerundeten Ecken, jedoch ohne Ausnehmungen. Der Rahmen 20 steht mit vorgegebener Breite über die rechtwinklig zueinander verlaufenden Seitenflächen 24 des Einsatzteils 14 vor, so daß der Rahmen 20 Anschlagflächen 26 für die axial gegenüberliegenden Stirnflächen des zweiten Profils 12 bildet. Mit der gemäß Zeichnung unteren, freien Fläche 28 liegt das Gehäuse 2 bzw. dessen Rahmen 20 auf der einen, gemäß Zeichnung nach oben weisenden Außenfläche 30 des ersten Profils 10 an, während die genannten Haltekrallen in die beiden Längsnuten 16 seitlich der Außenfläche 30 eingreifen und verspannt sind.

Zur Herstellung der Verbindung zwischen den beiden Profilschienen 10 und 12 wird das Betätigungselement bzw. der Schieber 4 in Richtung des Pfeiles 32 in eine Ausnehmung 34 des Gehäuses 2 bzw. des Rahmens 20 eingedrückt. Nach Herstellung der Verbindung nimmt das Betätigungselement bzw. der Schieber 4 die mit 4' bezeichnete Position ein und ist hierbei im wesentlichen vollständig in das Gehäuse 2 eingeschoben. Ein Benutzer erkennt folglich unmittelbar, daß die Verbindung ordnungsgemäß hergestellt worden ist. Hingegen steht der Schieber 4 vor Herstellung der Verbindung entsprechend weit aus dem Gehäuse 2 heraus. Das Betätigungselement 4 ist im Prinzip U-förmig ausgebildet und enthält ein Mitnahmeelement 36, welches mit einem Mitnahmekörper der genannten Spindel korrespondiert. Das Mitnahmeelement 36 ist in zweckmäßiger Weise als eine Verzahnung oder Zahnstange ausgebildet, welche mit einer Verzahnung der Spindel in Eingriff bringbar ist, so daß beim Einschieben des Betätigungselements oder Schiebers 4 die Spindel um die Längsachse 8 zum Spannen des Spannelements um einen vorgegebenen Winkel drehbar ist. Hierbei wird die Halteklammer in Richtung des Pfeiles A axial derart verspannt, daß die Haltekrallen kraftschlüssig und / oder formschlüssig in die Längsnuten 16 des ersten Profils 10 eingreifen. Gleichzeitig werden die noch zu erläuternden Spannkörper des Spannelements radial in Richtung der Pfeile B nach außen derart gedrückt, daß die Seitenflächen 24 des Gehäuses 2 an die Innenfläche des zweiten Profils 12 gepreßt werden. Die Spannkräfte entsprechend den Pfeilen A und B sind voneinander unabhängig, wobei erfindungsgemäß eine funktionale Trennung der Verbindung mit dem ersten Profil 10 einerseits und dem zweiten Profil 12 andererseits erreicht ist.

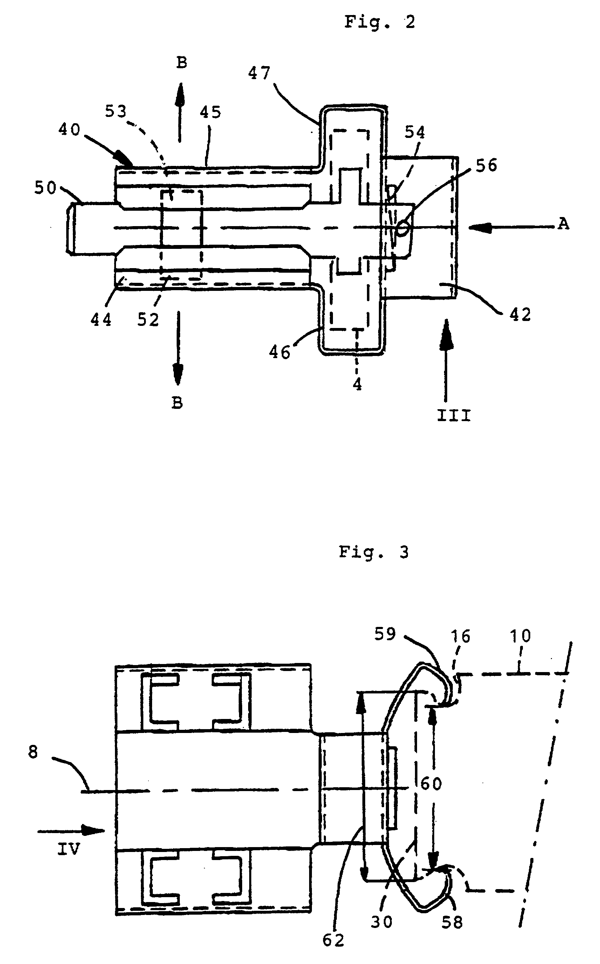

Fig. 2 zeigt in einer seitlichen Ansicht das bereits erwähnte Spannelement 40, welches in zweckmäßiger Weise einteilig als Blechteil, insbesondere aus Federstahl ausgebildet ist. Das Spannelement 40 besitzt an einem Ende die Halteklammer 42 zur Verbindung mit dem ersten Profil und am anderen Ende zwei Spannkörper 44, 45. Zwischen der Halteklammer 42 und den beiden Spannkörpern 44, 45 sind Winkelstücke 46, 47 vorhanden, welche eine Entkopplung der axialen und der radialen Vorspannung gewährleisten. Die beiden Spannkörper 44, 45 und die Winkelstücke 46, 47 sind im Inneren des hier nicht weiter dargestellten Gehäuses angeordnet, während die Halteklammer 42 zumindest teilweise aus dem Gehäuse bzw. dessen rechteckförmigem Rahmen herausragt. Das Spannelement 40 ist durch Ausstanzen aus einem einzigen Stahlblechteil und nachfolgenden Biegevorgang in die dargestellte bzw. erläuterte Form gebogen worden.

Innerhalb des Spannelements ist die Spindel 50 angeordnet. Die Spindel 50 enthält Nocken 52, 53, welche mit den Spannkörpern 44, 45 derart in Eingriff bringbar sind, daß beim Drehen um die Längsachse die Spannkörper 44, 45 gemäß den Pfeilen B radial nach außen gedrückt werden. Der Halteklammer 42 ist ferner eine Schrägfläche 54 zugeordnet, welche mit einem Kopplungsteil 56 der Spindel 50 zusammenwirkt. Das Kopplungsteil 56 ist hier als ein radialer Stift ausgebildet, welcher an der vorderen Schrägfläche 54 des Spannelements 40 bzw. der Halteklammer 42 derart anliegt, daß beim Drehen der Spindel 50 auf die Halteklammer 42 eine axiale Spannkraft in Richtung des Pfeiles A ausgeübt wird. Im nicht gespannten Zustand wird zum einen die Haiteklammer 42 mit dem ersten Profil in Eingriff gebracht und ferner das Einsatzteil des Gehäuses in den inneren Hohlraum des zweiten Profils eingeschoben. Nachfolgend wird die Spindel 50 mittels des Betätigungselements 4 derart gedreht, daß gleichzeitig die axiale Spannkraft gemäß Pfeil A und die radiale Spannkräfte gemäß den Pfeilen B erzeugt werden.

In einer alternativen Ausgestaltung besitzt die Spindel anstelle des Stiftes oder Kopplungsteils ein Außengewinde, welches in ein korrespondierendes Innengewinde des Spannelements 40 bzw. der Halteklammer 42 eingreift. Auch die Gewindeverbindung mit Schraub- bzw. Schrägflächen gewährleistet in zweckmäßiger Weise beim Drehen der Spindel 50 die axiale Bewegung und das Verspannen der Halteklammer.

Fig. 3 zeigt allein das Spannelement in einer um 90° um die Längsachse 8 im Vergleich mit Fig. 2 gedrehten Position. Wie ersichtlich, besitzt die Halteklammer 42 an ihren freien Enden die Haltekrallen 58, 59, welche in die hinterschnittenen Längsnuten der Profilschiene eingreifen können. Der freie Abstand 60 zwischen den Enden der Haltekrallen 58, 59 ist im Rahmen der Erfindung zweckmäßig um einen vorgegebenen Betrag kleiner als die Breite 62 der Außenfläche 30 des hier nur teilweise gestrichelt dargestellten ersten Profils 10. Die Halteklammer 42 wird beim Aufsetzen auf das Profil 10 zunächst aufgeweitet, bis die Haltekrallen 58, 59 in die hinterschnittenen Längsnuten 16 des Profils 10 einschnappen.

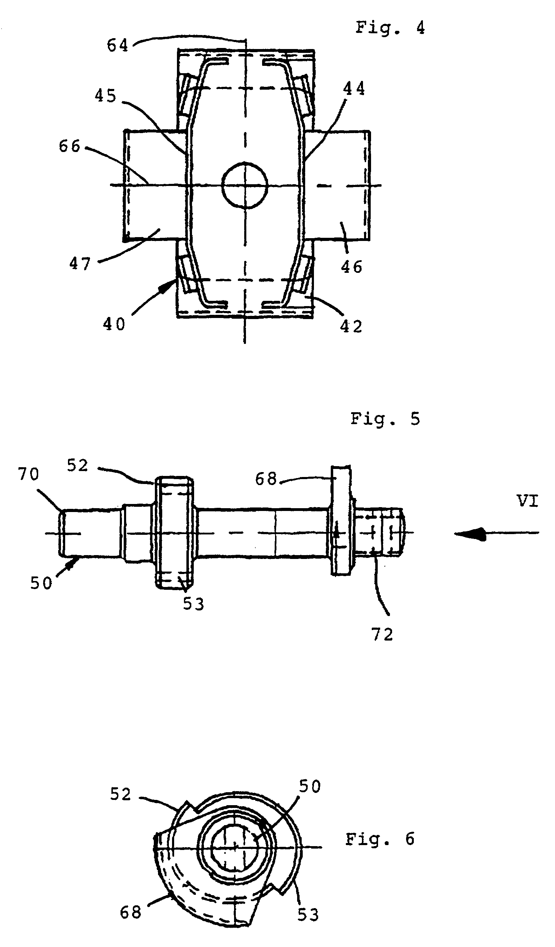

Fig. 4 zeigt in einer axialen Ansicht das Spannelement 40 mit der Halteklammer 42 und den beiden Winkelstücken 46, 47 sowie den Spannkörpern 44, 45. Durch die Halteklammer 42 läuft eine erste Längsebene 64 und durch die Spannkörper 44, 45 eine zweite Längsebene 66, welche im wesentlichen orthogonal zur ersten Längsebene 64 steht. Da ferner die Spannkörper 44, 45 nicht direkt, sondern über die Winkelstücke 46, 47 mit der Halteklammer 42 verbunden sind, ist eine funktionale Trennung der mittels Halteklammer 42 erzeugten axialen Bewegung bzw. Vorspannung gewährleistet.

Fig. 5 zeigt eine sichtliche Ansicht der Spindel 50 mit dem bereits erwähnten Mitnahmekörper 68, welcher als Außenverzahnung ausgebildet ist und mit dem Mitnahmeelement bzw. der Verzahnung des erläuterten Betätigungselements in Eingriff bringbar ist. Der Mitnahmekörper 68 bzw. die Außenverzahnung sind zweckmäßig als ein über einen vorgegebenen Winkelbereich sich erstreckendes Segment ausgebildet, mit welchem insbesondere die Verzahnung oder Zahnstange des Betätigungselements in Eingriff bringbar ist. Bei im wesentlichen U-förmiger Ausbildung des Betätigungselements gemäß Fig. 1 ist der eine Schenkel als die Zahnstange ausgebildet, während der andere Schenkel mit seiner Innenfläche an einer im wesentlichen zylindrischen Außenfläche des Stiftes anliegt. Somit ermöglicht das Betätigungselement bzw. der U-förmige Schieber eine radiale Lagerung oder Führung des Stiftes, welcher den Freiraum zwischen den beiden erläuterten Schenkeln des Betätigungselements durchdringt.

Des weiteren ist die eine Nocke 52 zur radialen Bewegung des einen Spannkörpers dargestellt. Am anderen Ende enthält die Spindel 50 eine Bohrung zur Aufnahme des erläuterten und als Stift ausgebildeten Kopplungsteils. Das gegenüberlegende Ende 70 der Spindel 50 besitzt einen derartigen Außendurchmesser, daß es in die an Hand von Fig. 1 bereits erwähnte Bohrung 6 des Gehäusebodens einsetzbar und / oder gelagert ist.

Für die erwähnte alternative Ausgestaltung kann die Spindel 50 im Rahmen der Erfindung als Kopplungsteil auch ein Außengewinde 72 aufweisen, welches in ein korrespondierendes Innengewinde der Halteklammer 42 eingreift, um zum Herstellen der Verbindung die axiale Bewegung und Verspannung der Halteklammer 42 aufzuzwingen.

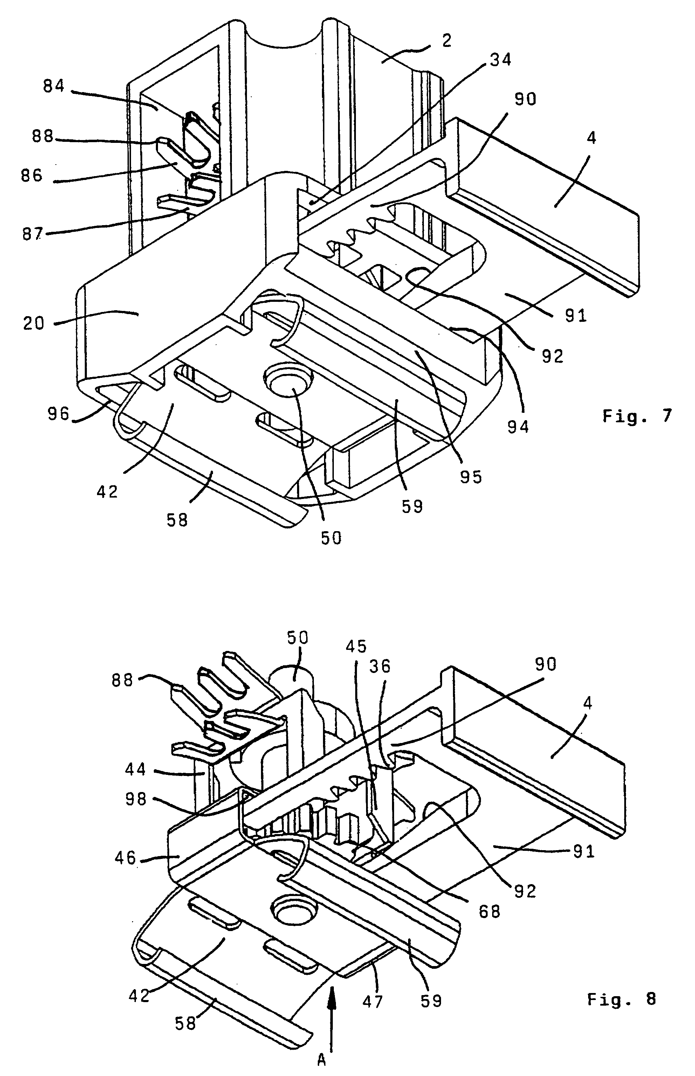

Fig. 6 zeigt in einer axialen Ansicht in Blickrichtung VI die Spindel 50 mit den beiden radialen Nocken 52, 53. Diese Nocken 52, 53 liegen innen an den erläuterten Spannkörpern 44, 45 derart an, daß beim Drehen der Spindel 50 die Spannkörper radial nach außen bewegbar sind. Die Nocken 52, 53 einerseits und die Schrägfläche oder Schraubfläche andererseits, welche der Halteklammer zugeordnet ist, sind unabhängig voneinander dimensioniert zwecks unabhängiger Vorgabe der radialen und axialen Spannkräfte.

Fig. 7 und 8 zeigen eine besondere Ausgestaltung des Profilverbinders, wobei in Fig. 8 das Gehäuse nicht dargestellt ist. Gemäß Fig. 7 enthält das Gehäuse 2 seitlich eine Öffnung 84 für wenigstens eine Haltekralle 86, 87 des innerhalb des Gehäuses 2 angeordneten Spannkörpers. Diametral zur Längsachse der Spindel 50 besitzt das Gehäuse 2 eine entsprechende zweite Öffnung für die dort in entsprechender Weise vorgesehenen Haltekrallen des anderen Spannelements. Beim Eindrücken des Betätigungselements 4 und Drehen der Spindel 50 gelangen die Haltekrallen 86, 87 mit der Innenfläche der Profilschiene, in welche das Gehäuse 2 eingeschoben ist, zur Anlage und werden gegen diese Innenfläche in der bereits erläuterten Weise verspannt. Die Haltekrallen 86, 87 weisen bevorzugt Spitzen oder Zähne 88 auf, welche eine hohe Flächenpressung an der Innenfläche des genannten Profils beim Festspannen gewährleisten. In zweckmäßiger Weise werden mittels den Haltekrallen 86, 87 und insbesondere deren Zähne 88 bleibende Verformungen in der Innenfläche des genannten Profils beim Festspannen erreicht, so daß letztendlich auch eine formschlüssige Verbindung hergestellt ist. Durch den direkten Eingriff der Haltekrallen und / oder deren Zähne wird der Auszugswiderstand des Profilverbinders aus der genannten Profilschiene erhöht und in besonders zweckmäßiger Weise mit geringem Aufwand optimiert.

Das axiale Verspannen der Halteklammer 42 wird direkt mittels des Betätigungselements 4 erreicht. Das Betätigungselement 4 besitzt an wenigstens einem der beiden Schenkel 90, 91 eine Schrägfläche oder Keilfläche 92. Die Schenkel 90, 91 greifen in die Winkelstücke 46, 47. Die Schenkel 90, 91 liegen zum einen mit ihrer gemäß Fig. 7 sichtbaren Unterseite auf der unteren Auflagefläche 94 der Ausnehmung 34 auf. Das Gehäuse 2 besitzt nicht nur die in Fig. 7 im vorderen Rahmenteil 95 sichtbare Ausnehmung 34, sondern entsprechend auf der Rückseite im hinteren Rahmenteil 96 eine weitere Ausnehmung. Sofern das Betätigungselement 4 vollständig in das Gehäuse 2 bzw. dessen Rahmen 20 eingeschoben ist, sind die freien Enden der beiden Schenkel 90, 91 auf einer entsprechenden Auflagefläche im hinteren Rahmenteil 96 abgestützt und aufgelagert.

Wie aus Fig. 8 ersichtlich, greift der Schenkel 90 in das Winkelstück 46 und entsprechend der andere Schenkel 91 in das andere seitliche Winkelstück 47. Der Schrägfläche 92 ist ein oberer Quersteg des Winkelstückes 47 zugeordnet, wobei die Halteklammer 42 auf der anderen Seite bezüglich des Betätigungselements 4 vorgesehen ist. Der hier nicht sichtbaren Keil- oder Schrägfläche des ersten Schenkels 90 ist der obere Quersteg 98 des ersten Winkelstücks 46 zugeordnet. Wird das Betätigungselement 4 eingeschoben, so gelangen die Schrägflächen 92 mit der Innenseite des jeweils oberen Steges 98 der Winkelstücke 46, 47 zur Anlage derart, daß das Halteelement 42 die Axialbewegung in Richtung des Pfeiles A erfährt. Das axiale Spannen erfolgt in zweckmäßiger Weise unmittelbar durch das Betätigungselement 4, über welches erfindungsgemäß gleichzeitig die Drehbewegung auf die Spindel 50 zur radialen Verspannung der Spannkörper 44, 45 eingeleitet wird.

In einer alternativen hier nicht dargestellten Ausgestaltung der Erfindung kann die wenigstens eine Schrägfläche des Betätigungselements im Vergleich mit der Ausführungsform von Fig. 7, 8 in einer bezüglich der Längsachse 8 um 180° gedrehten Stellung, also gemäß Zeichnung, an der sichtbaren Unterseite des Betätigungselements 4 angeordnet sein. Zur Abstützung und Auflagerung des Betätigungselements 4 in der Ausnehmung 34 dient dann entsprechend die obere, dem Einsatzteil des Gehäuses nächstliegende Auflagefläche der Ausnehmung 34. Unabhängig von der jeweiligen Ausgestaltung ist, daß über Schrägflächen oder Keilflächen, welche mit dem Betätigungselement 4 zusammenwirken, unmittelbar mittels des Betätigungselements 4 eine axiale Bewegung der Halteklammer 42 zum Festspannen der zugeordneten Profilschiene vorgegeben wird.

### Bezugszeichen

- 2: Gehäuse
- 4: Betätigungselement
- 6: Bohrung
- 8: Längsachse
- 10: erstes Profil
- 12: zweites Profil
- 14: Einsatzteil von 2
- 16: Längsnut in 10, 12
- 18: Ausnehmung in 14
- 20: Rahmen von 2
- 24: Seitenfläche von 14
- 26: Anschlagfläche von 20
- 28: freie Endfläche von 2 bzw. 20
- 30: Außenfläche
- 32: Pfeil
- 34: Ausnehmung in 2
- 36: Mitnahmeelement / Verzahnung
- 40: Spannelement
- 42: Halteklammer
- 44, 45: Spannkörper
- 46, 47: Winkelstück
- 50: Spindel
- 52, 53: Nocken
- 54: Schräg- oder Schraubfläche
- 56: Kopplungsteil
- 58, 59: Haltekralle
- 60: Abstand zwischen 58, 59
- 62: Breite von 30
- 64: erste Längsebene
- 66: zweite Längsebene
- 68: Mitnahmekörper
- 70: Ende von 50
- 72: Außengewinde
- 84: Öffnung
- 86, 87: Haltekralle
- 88: Zahn / Spitze
- 90, 91: Schenkel
- 92: Schrägfläche
- 94: Auflagefläche
- 95: vorderer Rahmenteil
- 95: hinterer Rahmenteil
- 98: Quersteg

## Patentansprüche

1. Profilverbinder mit einer Halteklammer (42) und Haltekrallen (58, 59) welche mit Längsnuten (16) eines ersten Profils (10) in Eingriff bringbar sind, und mit wenigstens einem Spannkörper (45), welcher bezüglich der Innenfläche eines zweiten Profils (12) verspannbar ist,
**dadurch gekennzeichnet, daß** eine drehbare Spindel (50) derart vorgesehen ist, **daß** die Halteklammer (42), an deren Enden die beiden Haltekrallen (58, 59) vorgesehen sind, in axialer Richtung bewegbar und / oder verspannbar ist und daß der oder die Spannkörper (44, 45) mittels der Spindel (50) in radialer Richtung nach außen pressbar sind.

2. Profilverbinder nach Anspruch 1, **dadurch gekennzeichnet, daß** die Halteklammer (42) und die Spannkörper (44, 45) Bestandteil eines einteilig ausgebildeten Spannelements (40) sind und / oder **daß** das Spannelement (40) einteilig als Blechteil, insbesondere aus Federstahl, ausgebildet ist.

3. Profilverbinder nach Anspruch 1 oder 2, **dadurch gekennzeichnet, daß** die Spindel (50) mittels eines Betätigungselements (4) drehbar ist, wobei die Spindel (50) ein Mitnahmekörper (68) aufweist, welches mit einem Mitnahmeelement (36) des Betätigungselements korrespondiert, und / oder **daß** das Betätigungselement (4) nach Herstellen der Verbindung eine definierte Position einnimmt, in welcher das Betätigungselement (4) weitgehend in eine Ausnehmung (34) des Gehäuses (2) eingeschoben ist.

4. Profilverbinder nach Anspruch 3, **dadurch gekennzeichnet, daß** das Betätigungselement (4) als Schieber ausgebildet ist, und / oder **daß** das Mitnahmeelement (36) als Verzahnung ausgebildet ist, welche mit dem gleichfalls als Verzahnung ausgebildeten Mitnahmekörper (68) der Spindel (50) in Eingriff bringbar ist.

5. Profilverbinder nach Anspruch 3 oder 4, **dadurch gekennzeichnet, daß** das Betätigungselement (4) im wesentlichen U-förmig ausgebildet ist und / oder zwei Schenkel aufweist, wobei der eine Schenkel das Mitnahmeelement (36) enthält und der gegenüberliegende Schenkel mit einer Innenfläche an einer bevorzugt zylindrischen Außenfläche der Spindel (50) anliegt.

6. Profilverbinder, nach einem der Ansprüche 1 bis 5, **dadurch gekennzeichnet, daß** zur axialen Bewegung und / oder Verspannung der Halteklammer (42) eine Schrägfläche (54, 92) vorgesehen ist, welche beim Drehen der Spindel (50) und / oder beim Bewegen des Betätigungselements (4) in Eingriff mit Gegenflächen des Spannelements (40) zur Erzeugung der axialen Bewegung und / oder Verspannung der Haltekrallen (58, 59) stehen.

7. Profilverbinder nach Anspruch 6, **dadurch gekennzeichnet, daß** das Betätigungselement (4) an wenigstens einem Schenkel (90, 91) die Schrägfläche (92) aufweist und/ oder **daß** der Schenkel (90, 91) in ein Winkelstück (46, 47) der Halteklammer (42) einschiebbar ist und mit einem Steg (98) zur Anlage bringbar ist und / oder **daß** der Schenkel (90, 91) auf einer Auflagefläche (94) des Gehäuses (2) abstützbar ist.

8. Profilverbinder nach einem der Ansprüche 1 bis 7, **dadurch gekennzeichnet, daß** die Spindel (50) wenigstens einen radialen Nocken (52, 53) aufweist, welcher dem Spannkörper (44, 45) zu dessen radialer Bewegung zugeordnet ist, und / oder **daß** die Spindel (50) zwischen den beiden diametral angeordneten Spannkörpern (44, 45) angeordnet ist und zwei den genannten Spannkörpern (44, 45) zugeordnete Nocken (52, 53) aufweist.

9. Profilverbinder nach einem der Ansprüche 1 bis 8, **dadurch gekennzeichnet, daß** das Spannelement (40) zumindest teilweise in dem Gehäuse (2) angeordnet ist, welches mit einem Einsatzteil (14) im zweiten Profil angeordnet ist, und / oder **daß** an der Innenseite des Einsatzteils (14) die radial nach außen pressbaren Spannkörper (44, 45) anliegen oder **daß** die Spannkörper (44, 45) Haltekrallen (86, 87) aufweisen, welche direkt mit der Innenfläche des Profils in Eingriff bringbar sind.

10. Profilverbinder, nach einem der Ansprüche 1 bis 9, **dadurch gekennzeichnet, daß** die Halteklammer (42) und die bevorzugt zwei Spannkörper (44, 45) funktional derart getrennt voneinander angeordnet sind, **daß** die axiale Bewegung der Halteklammer (42) und die radiale Bewegung oder Verspannung der Spannkörper (44, 45) im wesentlichen unabhängig voneinander vorgebbar sind.

11. Profilverbinder nach einem der Ansprüche 1 bis 10, **dadurch gekennzeichnet, daß** die Spindel (50) oder das Betätigungselement (4) eine Schräg- oder Schraubfläche (54, 92) aufweist, welche mit einer zugeordneten Fläche der Halteklammer (42) korrespondiert, und ferner wenigstens einen radialen Nocken (52, 53) zur radialen Bewegung des Spannkörpers (44, 45) aufweist, wobei die Schräg- oder Schraubfläche (54) unabhängig von der Nocke (52, 53) dimensioniert ist.

12. Profilverbinder nach einem der Ansprüche 1 bis 11, **dadurch gekennzeichnet, daß** das Spannelement (40) zwischen der Halteklammer (42) und den Spannkörpern (44, 45) angeordnete Winkelstücke (46, 47) aufweist und / oder **daß** die Winkelstücke (46, 47) sowie die Spannkörper (44, 45) innerhalb des Gehäuses (2) angeordnet sind, während die Haltekrallen (58, 59) und zumindest teilweise die Halteklammer (42) ausserhalb des Gehäuses (2) angeordnet sind.

13. Profilverbinder nach einem der Ansprüche 1 bis 12, **dadurch gekennzeichnet, daß** die freien Enden der Haltekrallen (58, 59) einen freien Abstand (60) zueinander aufweisen, welcher auch im nicht gespannten Zustand kleiner ist als die Breite (62) der Außenfläche (30) des Profils (10).

14. Profilverbinder nach einem der Ansprüche 1 bis 13, **dadurch gekennzeichnet, daß** das Gehäuse (2) wenigstens eine Öffnung (84) aufweist, durch welche der Spannkörper (44, 45) durchgreift und direkt an einer Innenfläche des zweiten Profils, in welches das Gehäuse (2) einschiebbar ist, zur Anlage bringbar ist und / oder **daß** der Spannkörper (44, 45) wenigstens eine Haltekralle (86, 87) aufweist, welche unmittelbar, vorzugsweise über wenigstens einen Zahn (88) mit der Innenfläche des zweiten Profils in Eingriff bringbar ist.

## Claims

1. Profile connector with a holding clamp (42) and holding claws (58, 59), which can be brought into engagement with longitudinal grooves (16) of a first profile (10), and with at least one tensioning member (45) which can be braced with respect to the inner face of a second profile (12), **characterised in that** a rotatable spindle (50) is provided in such a way that the holding clamp (42) on the ends of which the two holding claws (58, 59) are provided can be moved and/or braced in an axial direction and the tensioning member or bodies (44, 45) can be pressed outward in a radial direction by means of the spindle (50).

2. Profile connector according to claim 1, **characterised in that** the holding clamp (42) and the tensioning bodies (44, 45) are part of a tensioning element (40), designed in one piece, and/or the tensioning element (40) is designed in one piece as a sheet metal part, in particular made of spring steel.

3. Profile connector according to claim 1 or 2, **characterised in that** the spindle (50) is rotatable by means of an actuating element (4), wherein the spindle (50) has a drive member (68), corresponding to a drive element (36) of the actuating element and/or, after the connection has been produced, the actuating element (4) takes up a defined position, in which the actuating element (4) is largely inserted into a recess (34) of the housing (2).

4. Profile connector according to claim 3, **characterised in that** the actuating element (4) is designed as a sliding valve and/or the drive element (36) is designed as a set of teeth, which can be brought into engagement with the drive member (68) of the spindle (50), which is also designed as a set of teeth.

5. Profile connector according to claim 3 or 4, **characterised in that** the actuating element (4) is substantially designed so as to be U-shaped and/or has two legs, wherein one leg contains the drive element (36) and the opposite leg rests with an inner face against a preferably cylindrical outer face of the spindle (50).

6. Profile connector according to any one of claims 1 to 5, **characterised in that** for the axial movement and/or bracing of the holding clamp (42) an oblique face (54, 92) is provided, which on rotating of the spindle (50) and/or on moving of the actuating element (4) is in engagement with opposite faces of the tensioning element (40) to generate the axial movement and/or bracing of the holding claws (58, 59).

7. Profile connector according to claim 6, **characterised in that** the actuating element (4) has the oblique face (92) on at least one leg (90, 91) and/or the leg (90, 91) can be inserted into an elbow (46, 47) of the holding clamp (42) and can be brought into contact with a bridge (98) and/or the leg (90, 91) can be supported on a bearing face (94) of the housing (2).

8. Profile connector according to any one of claims 1 to 7, **characterised in that** the spindle (50) has at least one radial cam (52, 53), which is associated with the tensioning member (44, 45) for radial movement thereof and/or the spindle (50) is arranged between the two diametrically arranged tensioning bodies (44, 45) and has two cams (52, 53) associated with the above-mentioned tensioning bodies (44, 45).

9. Profile connector according to any one of claims 1 to 8, **characterised in that** the tensioning element (40) is arranged at least partially in the housing (2), which is arranged with an insertion part (14) in the second profile and/or the tensioning bodies (44, 45), which can be pressed radially outward, rest on the inside of the insertion part (14) or the tensioning bodies (44, 45) have holding claws (86, 87) which can be brought directly into engagement with the inner face of the profile.

10. Profile connector according to any one of claims 1 to 9, **characterised in that** the holding clamp (42) and the preferably two tensioning bodies (44, 45) are functionally separated from one another in such a way that the axial movement of the holding clamp (42) and the radial movement or bracing of the tensioning bodies (44, 45) are substantially predeterminable independently of one another.

11. Profile connector according to any one of claims 1 to 10, **characterised in that** the spindle (50) or the actuating element (4) has an oblique or screw face (54, 92), corresponding to an associated face of the holding clamp (42) and further has at least one radial cam (53, 53) for the radial movement of the tensioning member (44, 45), wherein the oblique or screw face (54) is dimensioned independently of the cam (52, 54).

12. Profile connector according to any one of claims 1 to 11, **characterised in that** the tensioning element (40) has elbows (46, 47) arranged between the holding clamp (42) and the tensioning bodies (44, 45) and/or the elbows (46, 47), as well as the tensioning bodies (44, 45), are arranged inside the housing (2), while the holding claws (58, 59) and at least partially the holding clamp (42) are arranged outside the housing (2).

13. Profile connector according to any one of claims 1 to 12, **characterised in that** the open ends of the holding claws (58, 59) have an open distance (60) from one another, which even in the non-tensioned state is smaller than the width (62) of the outer face (30) of the profile (10).

14. Profile connector according to any one of claims 1 to 13, **characterised in that** the housing (2) has at least one orifice (84), through which the tensioning member (44, 45) reaches and can be brought into contact with an inner face of the second profile, into which the housing (2) can be inserted, and/or the tensioning member (44, 45) has at least one holding claw (86, 87), which can be brought into engagement directly, preferably via at least one tooth (88), with the inner face of the second profile.

## Revendications

1. Raccord de profilés avec un étrier de retenue (42) et des griffes de retenue (58, 59), qui peuvent être mises en prise avec des rainures longitudinales (16) d'un premier profilé (10), et avec au moins un corps de serrage (45) qui peut être serré par rapport à la surface intérieure d'un deuxième profilé (12), ***caractérisé en ce qu*'**une broche rotative (50) est prévue, de telle manière que l'étrier de retenue (42), aux extrémités duquel sont prévues les deux griffes de retenue (58, 59), peut être déplacé et/ou serré dans la direction axiale et ***en ce que*** le ou les corps de serrage (44, 45) peuvent être pressés vers l'extérieur au moyen de la broche (50).

2. Raccord de profilés selon la Revendication 1, ***caractérisé en ce que*** l'étrier de retenue (42) et les corps de serrage (44, 45) font partie d'un élément de serrage (40) formé d'un seul tenant, et/ou ***en ce que*** l'élément de serrage (40) est conformé d'un seul tenant sous forme de pièce en tôle, en particulier en acier à ressort.

3. Raccord de profilés selon la Revendication 1 ou 2, ***caractérisé en ce que*** la broche (50) peut être tournée au moyen d'un élément de manoeuvre (4), la broche (50) présentant un corps d'entraînement (68) qui correspond à un élément d'entraînement (36) de l'élément de manoeuvre, et/ou ***en ce qu***'après l'établissement de la liaison, l'élément de manoeuvre (4) prend une position définie dans laquelle l'élément de manoeuvre (4) est en grande partie enfoncé dans un évidement (34) du boîtier (2).

4. Raccord de profilés selon la Revendication 3, ***caractérisé en ce que*** l'élément de manoeuvre (4) est conformé en poussoir et/ou ***en ce que*** l'élément d'entraînement (36) est conformé en denture, qui peut être mise en prise avec le corps d'entraînement (68) de la broche (50), également conformé en denture.

5. Raccord de profilés selon la Revendication 3 ou 4, ***caractérisé en ce que*** l'élément de manoeuvre (4) est conformé pour l'essentiel en U et/ou présente deux branches, la première branche contenant l'élément d'entraînement (36) et la branche opposée s'appuyant avec une surface intérieure contre une surface extérieure de préférence cylindrique de la broche (50).

6. Raccord de profilés selon l'une quelconque des Revendications 1 à 5, ***caractérisé en ce que***, pour le déplacement axial et/ou le serrage de l'étrier de retenue (42), il est prévu une surface inclinée (54, 92) qui, lors de la rotation de la broche (50) et/ou du mouvement de l'élément de manoeuvre (4), se trouve en prise avec des surfaces opposées de l'élément de serrage (40) afin de produire le déplacement axial et/ou le serrage des griffes de retenue (58, 59).

7. Raccord de profilés selon la Revendication 6, ***caractérisé en ce que*** l'élément de manoeuvre (4) présente la surface inclinée (92) sur au moins une branche (90, 91) et/ou ***en ce que*** la branche (90, 91) peut s'enfoncer dans un élément d'angle (46, 47) de l'étrier de retenue (42) et peut être mise en appui avec une barre (98), et/ou ***en ce que*** la branche (90, 91) peut s'appuyer sur une surface d'appui (94) du boîtier (2).

8. Raccord de profilés selon l'une quelconque des Revendications 1 à 7, ***caractérisé en ce* *que*** la broche (50) présente au moins un ergot (52, 53) qui est associé au corps de serrage (44, 45) pour son mouvement radial relatif, et/ou ***en ce que*** la broche (50) est placée entre les deux corps de serrage (44, 45) disposés diamétralement et présente deux ergots (52, 53) associés aux-dits corps de serrage (44, 45).

9. Raccord de profilés selon l'une quelconque des Revendications 1 à 8, ***caractérisé en ce que*** l'élément de serrage (40) est placé au moins partiellement dans le boîtier (2), lequel est placé avec un insert (14) dans le deuxième profilé, et/ou ***en ce que*** les corps de serrage (44, 45) pouvant être pressés radialement vers l'extérieur s'appuient contre la surface intérieure de l'insert (14) **et *en ce que*** les corps de serrage (44, 45) présentent des griffes de retenue (86, 87) qui peuvent être mises en prise directement avec la surface intérieure du profilé.

10. Raccord de profilés selon l'une quelconque des Revendications 1 à 9, ***caractérisé en ce que*** l'étrier de retenue (42) et les corps de serrage (44, 45), de préférence au nombre de deux, sont disposés d'une manière fonctionnellement séparée l'un des autres, de telle sorte que le mouvement axial de l'étrier de retenue (42) et le mouvement radial ou le serrage des corps de serrage (44, 45) peuvent être imposés de manière essentiellement indépendante l'un de l'autre.

11. Raccord de profilés selon l'une quelconque des Revendications 1 à 10, ***caractérisé en ce que*** la broche (50) ou l'élément de manoeuvre (4) présente une surface inclinée ou hélicoïdale (54,92) qui correspond à une surface associée de l'étrier de retenue (42), et présente de plus au moins un ergot radial (52, 53) pour le mouvement radial du corps de serrage (44, 45), la surface inclinée ou hélicoïdale (54) étant dimensionnée indépendamment de l'ergot (52, 53).

12. Raccord de profilés selon l'une quelconque des Revendications 1 à 11, ***caractérisé en ce que*** l'élément de serrage (40) présente des éléments d'angle (46, 47) placés entre l'étrier de retenue (42) et les corps de serrage (44, 45) et/ou ***en ce que*** les éléments d'angle (46, 47) ainsi que les corps de serrage (44, 45) sont placés à l'intérieur du boîtier (2), tandis que les griffes de retenue (58, 59) et au moins en partie l'étrier de retenue (42) sont placés à l'extérieur du boîtier (2).

13. Raccord de profilés selon l'une quelconque des Revendications 1 à 12, ***caractérisé en ce que*** les extrémités libres des griffes de retenue (58, 59) présentent une distance libre (60) entre elles qui, dans l'état non serré, est inférieure à la largeur (62) de la surface extérieure (30) du profilé (10).

14. Raccord de profilés selon l'une quelconque des Revendications 1 à 13, ***caractérisé en ce que*** le boîtier (2) présente au moins une ouverture (84) à travers laquelle le corps de serrage (44, 45) passe et peut être mis en appui contre une surface intérieure du deuxième profilé dans lequel le boîtier (2) peut être enfoncé, et/ou ***en ce que*** le corps de serrage (44, 45) présent au moins une griffe de retenue (86, 87) qui peut être mise en prise directement, de préférence par l'intermédiaire d'au moins une dent (88), avec la surface intérieure du deuxième profilé.
